(19) Europäisches Patentamt
European Patent Office
Office européen des brevets

(11) **EP 1 893 416 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**01.11.2017 Patentblatt 2017/44**

(45) Hinweis auf die Patenterteilung:
**11.03.2009 Patentblatt 2009/11**

(21) Anmeldenummer: 06754268.8

(22) Anmeldetag: **09.06.2006**

(51) Int Cl.:
**B42D 25/00** (2014.01)   **B24D 15/00** (2006.01)

(86) Internationale Anmeldenummer:
**PCT/EP2006/005567**

(87) Internationale Veröffentlichungsnummer:
**WO 2006/133863 (21.12.2006 Gazette 2006/51)**

(54) **SICHERHEITSDOKUMENT**

SECURITY DOCUMENT

DOCUMENT DE SÉCURITÉ

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.06.2005 DE 102005027380**

(43) Veröffentlichungstag der Anmeldung:
**05.03.2008 Patentblatt 2008/10**

(73) Patentinhaber: **OVD Kinegram AG**
**6301 Zug (CH)**

(72) Erfinder:
• **SCHILLING, Andreas**
**CH-6332 Hagendorn (ZG) (CH)**
• **TOMPKIN, Wayne, Robert**
**CH-5400 Baden (CH)**
• **SCHAEDLER, René**
**CH-6340 Baar (CH)**

(74) Vertreter: **Zinsinger, Norbert et al**
**Louis, Pöhlau, Lohrentz**
**Patentanwälte**
**Postfach 30 55**
**90014 Nürnberg (DE)**

(56) Entgegenhaltungen:
| | |
|---|---|
| EP-A1- 0 360 969 | WO-A-92/16378 |
| WO-A-97/19821 | WO-A1-03//055691 |
| WO-A1-03//068525 | WO-A1-03//070482 |
| WO-A1-04//049250 | DE-A1- 4 334 847 |
| DE-A1- 10 236 959 | JP-A- 2000 206 320 |
| JP-A- 2001 315 472 | US-A- 5 364 557 |
| US-A1- 2002 027 361 | |

• PFAFF G. ET AL: 'Special Effect Pigments', Bd. 2ND ED., 2008, VINCENZ NETWORK, HANNOVER Seiten 16 - 19
• Brechungsindexes von http://refractiveindex.info. für ZnS, ZrO2, ZnO, Si3N4, MgO und PMMA
• VCH - Verband Chemiehandel, Anhang 4 - Liste typischer Produkte.

EP 1 893 416 B2

## Beschreibung

Die Erfindung betrifft ein Sicherheitsdokument mit einem in einem Fenster oder in einem transparenten Bereich des Sicherheitsdokuments angeordneten transparenten Sicherheitselement, das eine transparente Strukturschicht und eine in eine erste Oberfläche der Strukturschicht abgeformte diffraktive Reliefstruktur aufweist.

Die zunehmende Verfügbarkeit und technische Reife von Farbkopierem und Scannern führt zu Kopien, die in der Farbqualität und Auflösung immer weniger vom Original zu unterscheiden sind. Deshalb werden Sicherheitsdokumente durch sog. OVD's geschützt, das sind optisch variable Elemente, die blickwinkelabhängig unterschiedliche optische Effekte ausbilden, die schwer kopierbar sind. Es ist jedoch möglich, die optischen Effekte durch nachgeahmte OVD's zu erzeugen, die beim Betrachter einen vergleichbaren optischen Eindruck erzeugen.

Aus DE 197 29 918 A1 ist ein Sicherheits- und/oder Wertdokument bekannt, das an unterschiedlichen Stellen über ein Sicherheitsmerkmal und ein Verifikationselement verfügt, wobei das Verifikationselement mit dem Sicherheitsmerkmal in Deckung gebracht wird, um die Echtheit des Sicherheitsmerkmals festzustellen. Das Verifikationselement ist in einem Fenster des Sicherheits- und/oder Wertdokuments angeordnet und enthält optische Elemente, wie beispielsweise Linsen, Zylinderlinsen oder Fresnellinsen, welche die Verifizierung des Sicherheitsmerkmals ermöglichen. Es kann auch vorgesehen sein, daß das Verifikations- und das Sicherheitselement beim Übereinanderlegen Moiré-Strukturen bilden oder Farbwechsel erzeugen.

In DE 100 40 785 A1 ist ein Sicherheitssystem beschrieben, bei dem ein erstes Sicherheitselement bei Lichteinfall außerhalb der Trägerebene ein Hologramm rekonstruiert, dessen verschlüsselte Information durch ein zweites Sicherheitselement, das durch Falten des Sicherheitselements in die Hologrammebene gebracht wird, lesbar gemacht wird.

Solchen Lösungen haftet der Nachteil an, daß sie aufwendig in der Herstellung sind, sowie Fertigkeiten und Wissen über den Gebrauch der Sicherheitsmerkmale voraussetzen.

DE 101 29 939 A1 beschreibt ein optisch variables Flächenmuster mit Reliefstrukturen zur Erzeugung von mindestens zwei, von einem Betrachter getrennt wahrnehmbaren Darstellungen, die beim Herstellen einer Kopie mittels eines Farbkopierers alle auf die Kopie übertragen werden.

WO 03/059643 A1 offenbart ein diffraktives Sicherheitselement mit integriertem optischem Wellenleiter.

DE 102 54 499 A1 offenbart eine Schichtanordnung mit einer, einen linsenartigen Effekt erzeugenden, beugungsoptisch wirksamen Struktur.

DE 103 18 157 A1 beschreibt eine Folie sowie ein optisches Sicherheitselement. Die Folie weist eine Trägerschicht und eine Replizierschicht auf, wobei in die Replizierschicht eine diffraktive Reliefstruktur zur Orientierung eines Flüssigkristallmaterials eingebracht ist.

EP 0 012 375 A2 beschreibt eine Identifikationskarte aus mehreren Schichten, die Sicherheitsmerkmale in Form von Gitterbildern aufweisen und deren Kartenkern ein Fenster aufweist, in welches ein Gitterbildträger für das Gitterbild eingesetzt ist.

Der Erfindung liegt nun die Aufgabe zugrunde, ein Sicherheitsdokument zu schaffen, das kostengünstig herstellbar ist und das allein durch Betrachtung eines Fensters eines Sicherheitselementes eine dem Beobachter auffällige und für die Echtheit typische optische Wirkung entfaltet.

Die Aufgabe der Erfindung wird durch ein Sicherheitsdokument mit einem Trägersubstrat gemäß Anspruch 1 gelöst.

Es zeigt sich somit auf der Vorderseite aufgrund der Transparenz des Sicherheitselements unerwartet ein anderes Erscheinungsbild als auf der Rückseite, wobei unterschiedliche Darstellungen, Helligkeiten, Kontraste, Farbeffekte, Vergrößerungs- oder Verkleinerungseffekte, 3-D-Effekte usw., allein oder in Kombination, sichtbar sein können.

Dabei muss das transparente Sicherheitselement lokal nicht überall transparent sein, sondern für den Betrachter lediglich im wesentlichen transparent erscheinen. So können beispielsweise auch opake Hintergrund- oder Musterbereiche vorhanden sein oder ein Rasterbild aus opaken und transparente Bereichen vorhanden sein, ohne dass der transparente Charakter des Sicherheitselements für den Betrachter verloren geht.

Der unerwartete Effekt tritt bei asymmetrischer diffraktiver Reliefstruktur bei auffallendem Licht zutage. Eine solche Reliefstruktur weist einen sägezahnförmigen periodischen Verkauf auf, wobei sich die beiden Sägezahnflanken einer Periode in ihrer Steigung voneinander signifikant unterscheiden. Die Reliefstruktur innerhalb einer Periode ist also asymmetrisch ausgebildet. Vorzugsweise kann vorgesehen sein, daß die eine Flanke eine endliche und die andere Flanke eine unendliche Steigung aufweist. Auf Grund dieser Asymmetrie weist die asymmetrische Reliefstruktur bei Betrachtung der Vorderseite und der Rückseite ein unterschiedliches optisches Erscheinungsbild auf. Bei Betrachtung des Sicherheitsdokuments ist die im ersten Bereich des Sicherheitselements angeordnete asymmetrische Reliefstruktur infolge Beugung des einfallenden Lichtes von der einen Seite sichtbar und von der anderen Seite unsichtbar. Es kann sich auch um einen deutlichen Helligkeitsunterschied handeln, den die diffraktiven Reliefstrukturen bei unterschiedlicher Betrachtungsrichtung aufweisen können. Der erste Bereich kann bei entsprechender Ausbildung im Durchlicht nicht sichtbar sein. Er ist demzufolge mit einem optischen Kopierer auch nicht kopierbar.

Wenn es sich bei der Reliefstruktur des ersten Bereiches um eine diffraktive asymmetrische Reliefstruktur mit nichtkonstanter Spatialfrequenz handelt, kann die Reliefstruktur zwar von der Vorderseite als auch von der Rückseite des Sicherheitsdokuments her sichtbar sein, aber sie zeigt doch bei Betrachtung in auffallendem Licht für jede Seite eine unterschiedliche optische Wirkung, wie weiter unten näher erläutert. Eine nichtkonstante Spatialfrequenz ist gleichbedeutend mit einer nichtkonstanten Periodenlänge, denn die Spatialfrequenz ist umgekehrt proportional zur Periodenlänge.

Bei der Betrachtung des erfindungsgemäßen Sicherheitsdokuments kommt es nicht auf das exakte Umwenden des Sicherheitsdokuments beim Betrachten der Vorderseite und der Rückseite an, denn der Betrachter wählt unbewußt die für die Ausbildung des optischen Effekts optimale Lage aus, indem er das Sicherheitsdokument solange hin und her kippt, bis der beabsichtigte optische Effekt eintritt.

Weitere vorteilhafte Ausgestaltungen sind in den Unteransprüchen bezeichnet.

Weiter kann vorgesehen sein, daß der erste Bereich und der zweite Bereich ineinander verschachtelte Raster bilden. Durch die Rasterung können die Bereiche scheinbar übereinander angeordnet werden, ohne sich gegenseitig zu stören. Dabei ist immer nur der eine Bereich sichtbar und der andere Bereich unsichtbar. Bei genügend feiner Rasterung, d.h. bei einer Rasterung, die mit einem unbewaffneten menschlichen Auge nicht auflösbar ist, erscheint der jeweils sichtbare Bereich als homogener Bereich. Es kann vorgesehen sein, daß die Rasterweite < 300 $\mu$m ist, vorzugsweise 50 $\mu$m ist.

Vortellhafterweise kann vorgesehen sein, daß der erste Bereich und der zweite Bereich ineinander verschachtelte Linearraster bilden. Es kann aber auch jedes andere Rasterprinzip vorgesehen sein, beispielsweise ein Punktraster mit quadratischen Pixeln.

In einer weiteren vorteilhaften Ausgestaltung ist vorgesehen, daß die Reliefstruktur des ersten und/oder zweiten Bereiches ein Blazegitter ist. Bei dem Blazegitter handelt es sich um ein Beugungsgitter. Zwischen dem Eintrittswinkel $\Theta_{ein}$ und dem Austrittswinkel $\Theta_{aus}$ besteht an einem Blazegitter in Abhängigkeit von der Gitterkonstanten d, der Wellenlänge $\lambda$ und der Beugungsordnung n folgende Beziehung:

$$\sin \Theta_{aus} = \sin \Theta_{ein} + n * \lambda/d$$

Das heißt, polychromatisches Licht, wie beispielsweise Tageslicht, wird durch die Beugung am Blazegitter in seine Grundfarben zerlegt. Das Blazegitter ist durch die Wahl der Gitterkonstanten d jedoch als achromatisches Blazegitter ausbildbar, bei dem die farbigen Teilstrahlen mindestens der ersten Beugungsordnung in einem Betrachtungswinkelbereich wieder zusammengeführt werden und so wieder polychromatisches Licht aus dem Blazegitter austritt. Auf diese Weise können ca. 90 % des einfallendes Lichtes als gebündelter Strahl gebeugt werden, wodurch die Bildwirkung besonders kontrastreich ausgebildet ist. Von dieser Eigenschaft leitet sich der Name des Gitters ab (to blaze = funkeln).

Für den beschriebenen Effekt wird das Blazegitter so gehalten, daß die Flanken mit endlicher Steigung das einfallende Licht beugen und in ein Auge eines Beobachters lenken. Deshalb tritt der Effekt in Abhängigkeit von der Betrachtungsrichtung immer nur an der ersten oder an der zweiten Reliefstruktur auf, wobei die beiden Reliefstrukturen gleich ausgebildet und spiegelbildlich zueinander angeordnet sein können. Dann ist jeweils nur eine Reliefstruktur so ausgerichtet, daß das von ihr gebeugte Licht in das Auge des Beobachters gelangt und auf diese Weise den mit der Reliefstruktur ausgefüllten Bereich sichtbar macht.

Zur weiteren Erhöhung des Bildkontrastes kann vorgesehen sein, daß die Strukturschicht zumindest bereichsweise mit einer reflektierenden metallischen Schicht beschichtet ist. Die metallische Schicht bildet eine Reflexionsschicht, welche gegenüber der Grenzflächenreflexion an der Grenzfläche zwischen zwei Schichten mit unterschiedlichem Brechungsindex eine deutlich verbesserte Reflexionsgrad zeigt. Bei der Grenzfläche kann es sich beispielsweise auch um eine an Luft grenzende Außenfläche einer Schicht handeln. Die Grenzflächenreflexion ist beispielsweise an Schaufensterscheiben zu beobachten, die den Blick auf die hinter der Schaufensterscheibe präsentierten Waren erschweren kann. Diese Grenzflächenreflexion ist deutlich polarisations- und winkelabhängig.

Weiter ist von Nachteil, daß beispielsweise auf der Oberfläche der Strukturschicht abgelagertes Öl oder Wasser die Grenzflächenreflexion behindert, weil Öl und Wasser etwa den gleichen Brechungsindex wie die Strukturschicht aufweisen können. Auch Abnützung und Oberflächenrisse können eine nicht beschichtete Strukturschicht in ihrer optischen Wirkung beeinträchtigen. Schließlich ist nachteilig, daß ein auf Grenzflächenreflexion beruhender Effekt durch galvanische Abformung kopiert werden kann.

In einer vorteilhaften Ausgestaltung ist vorgesehen, daß die reflektierende metallische Schicht abschnittsweise aus unterschiedlichen Materialien, insbesondere zur Erzeugung unterschiedlicher Farben, gebildet ist, vorzugsweise daß der erste Bereich mit einer ersten metallischen Schicht und der zweite Bereich mit einer zweiten metallischen Schicht beschichtet ist. Es kann sich bei den Metallen beispielsweise um Aluminium und Gold handeln, so daß die Strukturschicht bei Betrachtung von der einen Seite silbern und bei Betrachtung von der anderen Seite golden erscheint. Es kann auch vorgesehen sein, daß zwei metallische Schichten übereinander angeordnet sind, so daß die eine metallische Schicht von der einen Seite sichtbar ist und die andere metallische Schicht von der anderen Seite sichtbar ist. Beispielsweise kann eine Al-Schicht auf diese Weise mit einer Cu-Schicht beschichtet sein.

Es kann vorgesehen sein, daß die metallische Schicht musterförmig opak ausgebildet ist. Ein solches Merkmal kann ein weiteres schwer nachahmbares Sicherheitsmerkmal bilden.

Die opaken metallischen Schichtbereiche sind mit einer solchen Dicke ausgebildet sein, daß sie im Durchlicht nicht transparent erscheinen, beispielsweise mit einer Dicke von 400 nm. Insbesondere beträgt die Dicke aber nur etwa 50 nm.

Es kann aber auch vorgesehen sein, daß die metallische Schicht zumindest bereichsweise mit einer solchen Dicke ausgebildet ist, daß sie im Durchlicht transparent erscheint. Eine solche transparente metallische Schicht weist eine Dicke von einigen nm auf, beispielsweise 20 nm. Der optimale Wert ist materialabhängig und wellenlängenabhängig und kann wegen der komplexen Zusammenhänge der Einflußgrößen vorzugsweise durch Versuch ermittelt werden. Eine im Durchlicht transparente Schicht ist besonders wirkungsvoll, da im Auflicht unerwartet seitenabhängig unterschiedliche Darstellungen sichtbar sind. Sie ist besonders gut kopiergeschützt. Weiter ist zu beachten, daß der Grad der Transparenz auch von dem Tiefen-zu-Breiten-Verhältnis der unter der metallischen Schicht angeordneten Reliefstruktur abhängt.

In einer Ausgestaltung der Erfindung ist vorgesehen, daß die Strukturschicht zumindest bereichsweise mit einer dielektrischen HRI-Schicht (HRI = High Refractive Index) mit einem demzufolge hohen Brechungsindex beschichtet ist, wobei die beschichteten Bereiche semitransparent ausgebildet sind. Auch auf diese Weise kann die Grenzflächenreflexion verbessert werden und so der erfindungsgemäße Effekt verstärkt werden. Es kann sich bei der dielektrischen Schicht beispielsweise um einen Schutzlack handeln, der aufgerakelt oder aufgedruckt ist und die Reliefstrukturen der Strukturschicht vollständig ausfüllt.

Es kann vorgesehen sein, daß die erste Reliefstruktur oder die zweite Reliefstruktur eine diffraktive Reliefstruktur ist, die ausgehend von einem Bezugspunkt in mindestens zwei Richtungen mit sich ändernder Spatialfrequenz oder Tiefe ausgebildet ist, und auf die eine Reflexionsschicht aufgebracht ist. Bei sich ändernder Spatialfrequenz ändert sich auch die Flankensteigung der asymmetrischen Reliefstruktur, d.h. ein zwischen der Flanke und einer zur Oberfläche der Reliefstruktur parallelen Hauptebene ausgebildeter Flankenwinkel wächst mit zunehmender Flankensteigung bzw. Flankensteilheit. Es kann vorgesehen sein, daß sich die Spatialfrequenz ausgehend vom Bezugspunkt erhöht, vorzugsweise kontinuierlich erhöht. Die Flankensteilheit nimmt also zum Rand der Reliefstruktur zu. Dabei können die geneigten Flanken auch Abschnitte von stetigen Kurven sein. Es handelt sich also um eine beugungsoptisch wirksame Struktur mit einer hinsichtlich der Spatialfrequenz und gegebenenfalls weiterer Gitterkonstanten über den Flächenbereich vorzugsweise kontinuierlich verändernden Reliefstruktur, die derart gestaltet ist, daß die jeweils einen Flanken der Gitterfurchen parallel zueinander und etwa parallel zu einer Senkrechten auf die Hauptebene der Reliefstruktur verlaufen, während sich der Winkel der jeweils anderen Flanken der Gitterflächen gegenüber der Hauptebene über den Flächenbereich im wesentlichen kontinuierlich ändert, wobei die Gittertiefe höchstens 10 $\mu$m beträgt.

Durch die Reflexionsschicht kann die vorstehend beschriebene Reliefstruktur als Hohlspiegel wirken. Eine als Hohlspiegel wirkende diffraktive Reliefstruktur erscheint von der einen Seite betrachtet als Konvexspiegel und von der anderen Seite betrachtet als Konkavspiegel. Dieser Effekt ist beispielsweise an einem Kaffeelöffel zu beobachten. Der Hohlspiegeleffekt kann jedoch auch an einer unbeschichteten transparenten oder teiltransparenten Reliefstruktur beobachtet werden, wenn sich die Brechungsindizes der Strukturschicht und des angrenzenden Mediums hinreichend voneinander unterscheiden.

Mit der vorstehend beschriebenen Reliefstruktur können vielfältige optische Wirkungen erreicht werden. Beispielsweise können sich Bilder, Logos oder Texte scheinbar vor oder hinter der Oberfläche des Sicherheitselements befinden. Eine solche Wirkung kann zwar auch mit Hologrammen erzielt werden, doch sind die am Hohlspiegel erzeugten Spiegelbilder lichtstärker als ein Hologramm und farblich frei wählbar.

Es kann weiter vorgesehen sein, daß die Strukturschicht einen dritten Bereich aufweist, der bei der Betrachtung von der Vorderseite und von der Rückseite her den gleichen optischen Effekt zeigt. Ein solcher Bereich kann als Hintergrundbereich wirken. Es kann vorgesehen sein, daß der dritte Bereich mit einer symmetrischen diffraktiven Reliefstruktur ausgebildet ist, beispielsweise als Hologramm oder KINEGRAM® ausgebildet ist.

Der Begriff der Symmetrie wird hier nicht im streng mathematischen Sinne gebraucht, sondern zur Abgrenzung von den asymmetrischen Reliefstrukturen, die vorstehend beschrieben sind. Es werden auch Reliefstrukturen als symmetrisch bezeichnet, die bei Faltung an einer Symmetrielinie nicht vollständig zu Deckung gebracht werden können, deren Flanken sich jedoch im Betrag ihrer Steigung so wenig voneinander unterscheiden, daß der beschriebene betrachtungsabhängige optische Effekt nicht eintritt.

Es kann weiter vorgesehen sein, daß der dritte Bereich als Mattstruktur oder als Dünnschichtsystem ausgebildet ist. Bei der Mattstruktur handelt es sich um eine diffus Licht streuende Reliefstruktur, die deshalb matt erscheint. Eine solche Reliefstruktur kann typisch eine Strukturtiefe von $\leq$ 10 $\mu$m aufweisen. Auch ein Fourier-Hologramm oder ein computergeneriertes Hologramm, ein sog. Kinoform, mit einem verborgenen Merkmal können als Mattstruktur wirken.

Sie haben die Aufgabe, ein verborgenes Merkmal in Reflexion oder Transmission zu projizieren.

Dünnschichtsysteme sind aus einer Abfolge dünner Schichten mit einer Dicke von λ/2 bzw. λ/4 gebildet und zeigen kippwinkelabhängige farbige Effekte.

In einer weiteren vorteilhaften Ausgestaltung ist vorgesehen, daß in dem dritten Bereich eine Flüssigkristallschicht angeordnet ist. Ein solcher Bereich kann beispielsweise als schwarzer Bereich oder als vielfarbiger Bereich ausgebildet sein oder nur im UV- oder Infrarot-Bereich sichtbar sein oder den Eindruck eines Edelsteins vermitteln.

Es kann vorgesehen sein, daß sich die Bereiche des Sicherheitselements im Register zueinander und/oder zu Bereichen des Sicherheitsdokuments befinden.

In einer weiteren Ausgestaltung ist vorgesehen, daß das Sicherheitselement ein mehrschichtiger Folienkörper mit einer transparenten Trägerschicht ist. Es kann sich bei der Trägerschicht um eine transparente Polymerfolie mit einer Schichtdicke von etwa 70 μm handeln.

Es kann auch vorgesehen sein, daß das Sicherheitselement eine Transferlage einer Transferfolie ist.

In einer weiteren Ausgestaltung ist vorgesehen, daß die Strukturschicht eine äußere Schicht des Sicherheitsdokuments oder ein Abschnitt einer äußeren Schicht des Sicherheitsdokuments ist. Die Strukturschicht kann also integraler Bestandteil des Sicherheitsdokuments sein und dabei in einem transparenten Bereich des Sicherheitsdokuments angeordnet sein. Eine solche Ausbildung kann vorteilhafterweise vorgesehen sein, wenn es sich bei dem Sicherheitsdokument um eine Plastikkarte handelt.

Weiter kann vorgesehen sein, daß die Strukturschicht eine innere Schicht des Sicherheitsdokuments oder ein Abschnitt einer inneren Schicht des Sicherheitsdokuments ist. Auf diese Weise ist die Strukturschicht besonders gut geschützt und einer Manipulation von außen nicht zugänglich.

Wenn die erste Oberfläche der Strukturschicht frei liegt, also von außen zugänglich ist, kann die Strukturschicht bei entsprechender Dimensionierung auch taktil erfaßbar sein und auf diese Weise ein weiteres Sicherheitsmerkmal bilden. Sie kann dabei auch einen taktilen Eindruck hervorrufen, der auf der Vorderseite und auf der Rückseite unterschiedlich ist.

Im folgenden wird die Erfindung anhand von mehreren Ausführungsbeispielen unter Zuhilfenahme der beiliegenden Zeichnungen beispielhaft verdeutlicht.

Es zeigen

| | |
|---|---|
| Fig. 1a, b | ein erstes Anwendungsbeispiel eines erfindungsgemäßen Sicherheitsdokuments; |
| Fig. 2 | das Sicherheitselement in Fig. 1a und 1b in vergrößerter schematischer Ansicht; |
| Fig. 3a | eine schematische Schnittdarstellung der Reliefstruktur längs der Schnittlinie IIIa-IIIa in Fig. 2; |
| Fig. 3b | eine schematische Schnittdarstellung der Reliefstruktur längs der Schnittlinie IIIb-IIIb in Fig. 2; |
| Fig. 4a | eine schematische Darstellung der Funktion der Reliefstruktur in Fig. 3a bei Betrachtung von der Vorderseite; |
| Fig. 4b | eine schematische Darstellung der Funktion der Reliefstruktur in Fig. 3b bei Betrachtung von der Vorderseite; |
| Fig. 5a | eine schematische Darstellung der Funktion der Reliefstruktur in Fig. 3a bei Betrachtung von der Rückseite; |
| Fig. 5b | eine schematische Darstellung der Funktion der Reliefstruktur in Fig. 3b bei Betrachtung von der Rückseite; |
| Fig. 6a | ein erstes Anordnungsbeispiel der Reliefstruktur eines Sicherheitselements in schematischer Schnittdarstellung; |
| Fig. 6b | ein zweites Anordnungsbeispiel der Reliefstruktur eines Sicherheitselements in schematischer Schnittdarstellung; |
| Fig. 6c | ein drittes Anordnungsbeispiel der Reliefstruktur eines Sicherheitselements in schematischer Schnittdarstellung; |
| Fig. 6d | ein viertes Anordnungsbeispiel der Reliefstruktur eines Sicherheitselements in schematischer |

Schnittdarstellung;

Fig. 7a, b          ein zweites Anwendungsbeispiel eines erfindungsgemäßen Sicherheitsdokuments;

Fig. 8a          eine schematische Schnittdarstellung eines aus einer asymmetrischen Reliefstruktur erzeugten gekrümmten Spiegels;

Fig. 8b          eine zweite schematische Schnittdarstellung eines aus einer asymmetrischen Reliefstruktur erzeugten gekrümmten Spiegels in vergrößerter Ansicht;

Fig. 9a          eine schematische Darstellung der Funktion der Reliefstruktur in Fig. 8 bei Betrachtung von der Vorderseite;

Fig. 9b          eine schematische Darstellung der Funktion der Reliefstruktur in Fig. 8 bei Betrachtung von der Rückseite;

Fig. 10a bis 10c          ein drittes Anwendungsbeispiel eines erfindungsgemäßen Sicherheitsdokuments.

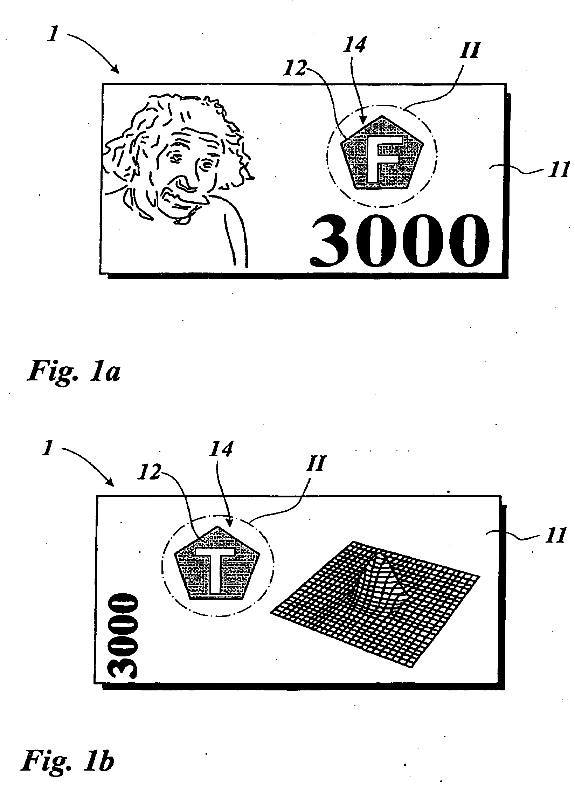

Die Fig. 1a und 1b zeigen ein Sicherheitsdokument 1 mit einem transparenten Sicherheitselement 12 in der Vorderansicht bzw. in der Rückansicht.

Das Sicherheitsdokument 1 ist in dem in Fig. 1a und 1b dargestellten Beispiel ein Wertdokument, beispielsweise eine Banknote oder ein Scheck. Weiter ist es auch möglich, daß das Sicherheitsdokument 1 ein Identifikations-Dokument, beispielsweise einen Ausweis, bildet.

Das Sicherheitsdokument 1 besteht aus einem flexiblen Träger 11, auf dem das transparente Sicherheitselement 12 in einem Bereich 14 angeordnet ist. Bei dem Träger 11 handelt es sich vorzugsweise um einen Träger aus Papiermaterial, der mit einem Aufdruck versehen ist und in den weitere Sicherheitsmerkmale, beispielsweise Wasserzeichen oder Sicherheitsfäden, eingebracht sind. Es kann auch ein nichtflexibler Träger 11 vorgesehen sein, wie das beispielsweise bei ID-Karten, Paßeinlagen und dgl. der Fall sein kann.

Es ist jedoch auch möglich, daß es sich bei dem Träger 11 um eine Kunststoffolie oder um ein aus ein oder mehreren Papier- und Kunststoffschichten bestehendes Laminat handelt.

In dem Bereich 14 wird in den Träger 11 eine fensterförmige Durchbrechung, beispielsweise durch Stanzen, eingebracht, die anschließend durch Applizieren des transparenten Sicherheitselements 12 wieder verschlossen wird. Damit weist das Sicherheitsdokument 1 im Bereich 14 ein transparentes Fenster mit dem transparenten Sicherheitselement 12 auf.

Es ist jedoch auch möglich, daß als Material für den Träger 11 bereits ein transparentes oder teiltransparentes Material verwendet wird und der Träger somit im Bereich 14 verbleiben kann. Dies ist beispielsweise der Fall, falls der Träger 11 aus einer transparenten Kunststoffolie besteht, die im Bereich 14 nicht mit einer Trübungsschicht versehen ist. Weiter ist es auch möglich, das transparente Fenster bereits bei der Papierherstellung zu erzeugen und das transparente Sicherheitselement 12 nach Art eines breiten Sicherheitsfadens in den Träger 11 einzubringen.

Wie in Fig. 1a und 1b dargestellt, ist bei Betrachtung der Vorderseite des Sicherheitsdokuments 1 auf dem Sicherheitselement 12 der Buchstabe "F" zu erkennen. Bei Betrachtung der Rückseite des Sicherheitsdokuments 1 ist auf dem Sicherheitselement 12 der Buchstabe "T" zu erkennen.

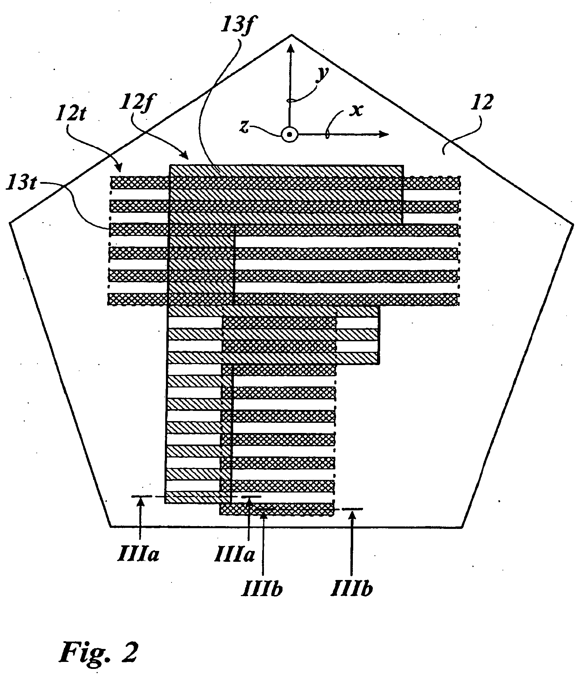

Der detaillierte Aufbau des Sicherheitselements 12 und dessen Funktionsweise wird nun anhand der Figuren 2, 3a, 3b, 4a, 4b, 5a und 5b erläutert.

Fig. 2 zeigt das Sicherheitselement 12 in Fig. 1a und 1b in vergrößerter schematischer Darstellung. Das Sicherheitselement 12 weist einen F-förmigen Bereich 12f und einen T-förmigen Bereich 12t auf, die ineinander verschachtelt sind und aus Rasterlinien 13f bzw. 13t gebildet sind. Die Rasterlinien weisen einen Abstand von ca. 50 $\mu$m zueinander auf und sind zwischen 5 mm und 20 mm lang. Die Rasterlinien 13f des F-förmigen Bereichs 12f sind durch eine einfache Schraffur und die Rasterlinien 13t des T-förmigen Bereichs 12t sind durch eine Kreuzschraffur hervorgehoben. Die Rasterlinien 13f, 13t sind bei der Betrachtung ohne optische Hilfsmittel, d.h. aus einem typischen Betrachtungsabstand von 250 mm, nicht voneinander zu trennen, so daß sowohl der F-förmige Bereich 12f als auch der T-förmige Bereich 12t einem Betrachter als homogene Bereiche erscheinen.

Zur Erläuterung der Funktionsweise des Sicherheitselements 12 sind in den Fig. 2, 3a, 3b, 4a, 4b, 5a, 5b sowie 9a, 9b x,y,z-Koordinatensysteme angegeben. Dabei bezeichnen die x-Achse und die y-Achse die Oberfläche des Sicherheitselements 12 und die z-Achse bezeichnet die Höhenerstreckung.

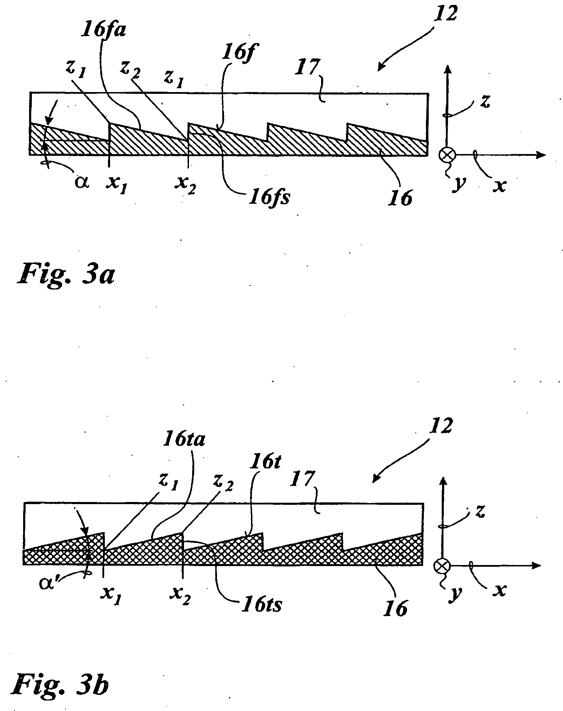

Fig. 3a zeigt nun in schematischer Darstellung einen Schnitt durch das Sicherheitselement 12 längs einer Rasterlinie 13f. Die optische Wirkung der Rasterlinie 13f des Sicherheitselements 12 wird durch zwei benachbarte Strukturschichten 16 und 17 hervorgerufen, die unterschiedliche optische Brechungsindizes $n_{16}$ bzw. $n_{17}$ aufweisen.

Auf diese Weise kann eine in der Grenzfläche zwischen den beiden Strukturschichten 16, 17 ausgebildete Reliefstruktur 16f ihre optische Wirkung entfalten. Die auf der Strukturschicht 16 angeordnete Strukturschicht 17 kann auch durch Luft oder ein anderes Umgebungsmedium gebildet sein. Entscheidend für die weiter unten beschriebene, auf Reflexion an der Reliefstruktur 16f beruhende optische Wirkung ist ein hinreichender Unterschied der Brechungsindizes $n_{16}$ und $n_{17}$:

$$n_{16} - n_{17} > 0,2$$

Weil jedoch nur ein geringer Teil des auf die Reliefstruktur 16f fallenden Lichtes reflektiert wird, kann vorteilhafterweise auf der Reliefstruktur 16f eine Reflexionsschicht vorgesehen sein, z.B. aus Ag, Al, Au, Rh, Cu, Cr, Ti, $TiO_2$ oder ZnS oder die Strukturschicht 17 mit einem hohen Brechungsindex ausgebildet sein.

Es kann vorgesehen sein, daß die Strukturschicht 16 zugleich eine Trägerschicht ist, in welche die Reliefstruktur 16f beispielsweise mittels Heißprägen abgeformt ist, und daß die Strukturschicht 17 beispielsweise durch einen Schutzlack oder Kleber gebildet ist, der vollflächig durch Drucken oder Rakeln aufgetragen ist.

Wie in Fig. 3a zu erkennen ist, weist die Reliefstruktur 16f einen sägezahnförmigen, periodischen Verlauf auf. Sie bildet auf diese Weise ein Blazegitter, daß dadurch charakterisiert ist, daß eine bestimmte Beugungsordnung des auffallenden Lichtes besonders hell erscheint bzw. daß ein bestimmter Ein- und Ausfallwinkel eine besonders große Helligkeit ergibt.

Im weiteren wird beispielhaft ein Abschnitt der Reliefstruktur 16f beschrieben, der sich im Bereich $x_1$ bis $x_2$ erstreckt und in dem die Reliefstruktur kontinuierlich von einer Ausgangshöhe $z_1$ auf eine Endhöhe $z_2$ abfällt. Eine erste Flanke 16fa schließt mit der x-Achse einen Winkel $\alpha$ ein, den sog. Blazewinkel. Im Punkt $x_2$ ist eine zweite Flanke 16fs ausgebildet, die parallel zur z-Achse verläuft und an der die Reliefstruktur 16f auf die Ausgangshöhe $z_1$ zurückspringt. Die Strecke $x_1 x_2$ bezeichnet die Gitterkonstante d der Reliefstruktur 16f. Sie beträgt in dem dargestellten Ausführungsbeispiel 10 $\mu$m. Aus der Gitterkonstanten d kann die Spatialfrequenz f der Reliefstruktur 16f wie folgt berechnet werden:

$$f = 1/d = 1/10 \ \mu m = 1/10^{-2} \ mm = 100 \ Linien/mm$$

Die Höhe $z_1 z_2$ der zweiten Flanke 16fs bezeichnet die Profiltiefe der Reliefstruktur 16f. Sie beträgt in dem dargestellten Ausführungsbeispiel 1,5 $\mu$m.

Fig. 3b zeigt nun in analoger schematischer Darstellung zu Fig. 3a einen Schnitt durch das Sicherheitselement 12 längs der Rasterlinie 13t. Wie zu erkennen ist, weist die Strukturschicht 16 im Bereich der Rasterlinie 13t eine Reliefstruktur 16t auf, die sich von der Reliefstruktur 16f in Fig. 3a dadurch unterscheidet, daß eine erste Flanke 16ta mit positivem Anstieg ausgebildet ist, d.h. zwischen $x_1$ und $x_2$ kontinuierlich von der Ausgangshöhe $z_1$ auf die Endhöhe $z_2$ ansteigt und längs einer senkrechten zweiten Flanke 16ts im Punkt $x_2$ wieder auf die Ausgangshöhe $z_1$ abfällt. Die erste Flanke 16ta schließt mit der x-Achse einen Blazewinkel $\alpha'$ ein.

Der Vergleich der in den Fig. 3a und 3b dargestellten Reliefstrukturen 16f und 16t zeigt, daß es sich bei der Reliefstruktur 16t um die an der z-Achse gespiegelte Reliefstruktur 16f handelt, wobei beide Reliefstrukturen betragsmäßig den gleichen Blazewinkel aufweisen. Die in den Fig. 3a bzw. 3b dargestellten Reliefstrukturen 16f bzw. 16t sind so dimensioniert, daß das auffallende polychromatische Licht, beispielsweise Tageslicht, so aufgespalten wird, daß die an der Reliefstruktur erzeugten farbigen Teilstrahlen sich überlappen und wieder einen farblosen Strahl bilden. Es handelt sich also um ein achromatisches Blazegitter, das in dem dargestellten Ausführungsbeispiel, wie weiter oben dargestellt, eine Gitterkonstante von 10 $\mu$m und eine Profiltiefe von 1,5 $\mu$m aufweist. Es kann in einem begrenzten Winkelbereich über 90 % des aufgestrahlten Lichtes reflektieren und bildet so einen sehr hohen Kontrast aus.

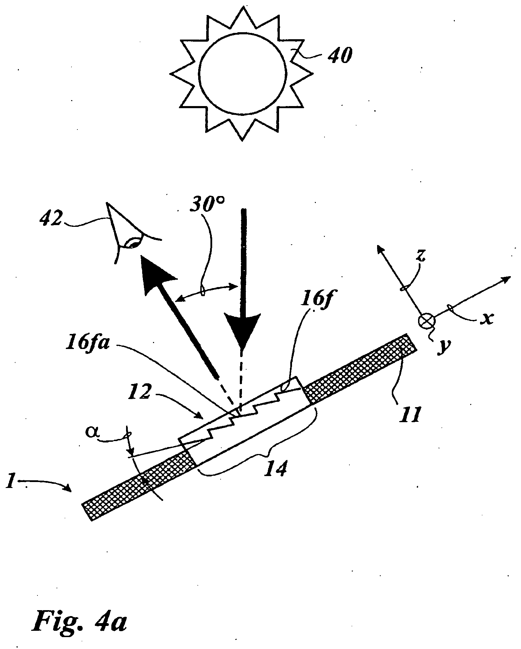

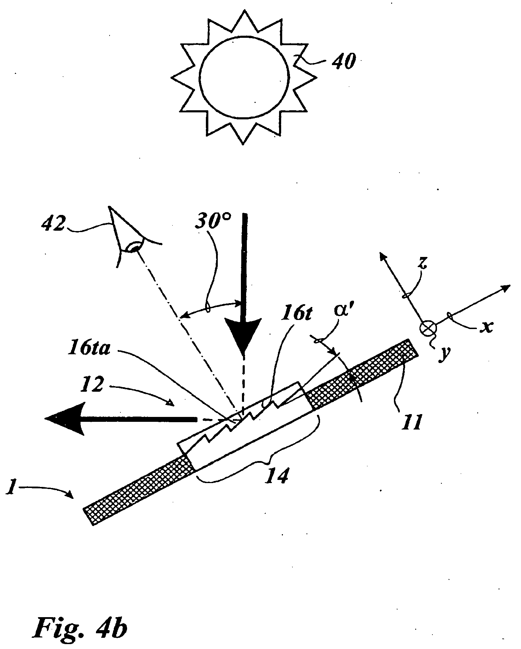

Die Fig. 4a und 4b zeigen nun die Wirkung der vorstehend beschriebenen Reliefstrukturen.

Fig. 4a zeigt das Sicherheitsdokument 1 (s. Fig. 1), dessen Vorderseite von einer Lichtquelle 40 beleuchtet wird, in schematischer Schnittdarstellung. In dem Fenster 14 des Sicherheitsdokuments 1 ist das Sicherheitselement 12 angeordnet, wobei in Fig. 4a der Schnitt durch einen streifenförmigen Abschnitt gezeigt ist, in den die Reliefstruktur 18f abgeformt ist. Die ersten Flanken 16fa der Reliefstruktur 16f (s. Fig. 3a) lenken von der Lichtquelle 40 ausgesandte Strahlen in ein Auge 42 eines Beobachters. Die von der Lichtquelle 40 ausgesandten Stahlen schließen mit der Blickrichtung des Beobachters einen Winkel von 30° ein. Die Blickrichtung des Beobachters ist senkrecht auf die Oberfläche des Sicherheitsdokuments 1 gerichtet. Weil nur die Strahlen der Lichtquelle 40 in das Auge 42 des Beobachters gelenkt werden, die an den streifenförmigen Abschnitten des F-förmigen Bereichs 12f (s. Fig. 2) des Sicherheitselements 12 reflektiert werden, erblickt der Beobachter ein "F", das sich hell leuchtend von seiner Umgebung abhebt.

Fig. 4b zeigt nun die Wirkung der Reliefstruktur 16t, deren ansteigende erste Flanken 16ta das Licht der Strahlungsquelle 40 am Auge 42 des Beobachters vorbeilenken. Infolgedessen gelangen keine Strahlen aus dem T-förmigen Bereich 12t des Sicherheitselements 12 (s. Fig. 2) in das Auge 42 des Beobachters, und das "T" ist nicht sichtbar.

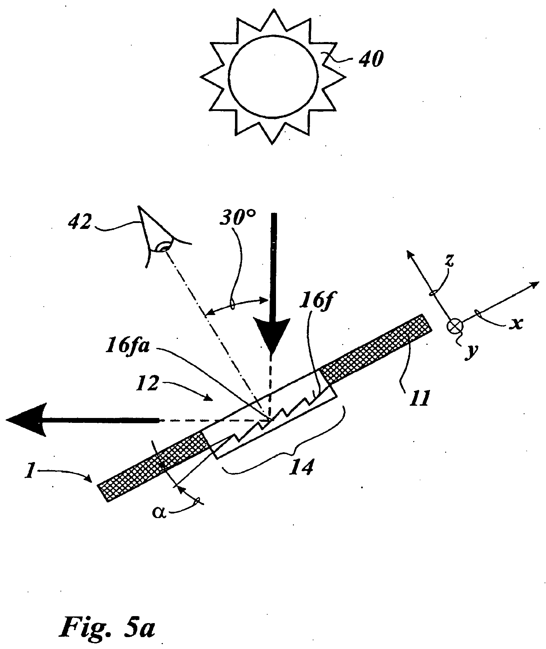

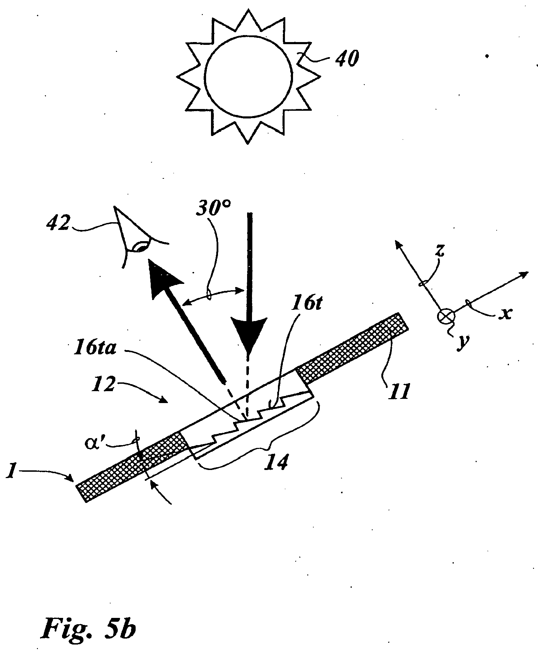

Die Fig. 5a und 5b zeigen nun die Funktionsweise des Sicherheitselements 12, wenn das Sicherheitsdokument 1 um 180° um die x-Achse gedreht ist, so daß seine Rückseite von der Strahlungsquelle 40 beleuchtet ist. Zwischen dem Auge 42 des Beobachters und den von der Lichtquelle 40 ausgehenden Strahlen ist wie vorstehend in Fig. 4a und 4b dargestellt, ein Winkel von 30° eingeschlossen.

Aus dem F-förmigen Bereich 12f (s. Fig. 2) gelangt nun kein Licht in das Auge 42 des Beobachters, denn die ersten Flanken 16fa der Reliefstruktur 16f sind nun in eine solche Lage gebracht, daß sie wie die ersten Flanken 16ta in Fig. 4b ansteigen. In Folge dessen werden die von der Lichtquelle 40 ausgesandten Strahlen am Auge 42 des Beobachters vorbeigelenkt.

In analoger Weise sind nun in Fig. 5b die ersten Flanken 16ta der Reliefstruktur 16f sind nun in eine solche Lage gebracht, daß sie wie die ersten Flanken 16fa in Fig. 4a abfallen. Die von der Lichtquelle 40 ausgehenden Strahlen werden in das Auge 42 des Beobachters gelenkt, und der Buchstabe "T" hebt sich helleuchtend von seiner Umgebung ab.

Die Fig. 4a bis 5b zeigen also, daß das transparente Sicherheitselement 12 je nach Betrachtungsrichtung von der Vorderseite oder von der Rückseite her eine unterschiedliche optische Information bereitstellt, in dem gewählten Beispiel die Buchstaben "F" oder "T". Ein solches Sicherheitsmerkmal ist besonders effektvoll, weil es dem "gesunden Menschenverstand" widerspricht, daß auf einer transparenten Fläche unterschiedliche Zeichen erscheinen, in Abhängigkeit davon, von welcher Seite die transparente Fläche betrachtet wird.

Es kann auch vorgesehen sein, daß die Reliefstruktur 16f und 16t unterschiedlich dimensioniert sind, beispielsweise, daß sie sich in der Gitterkonstanten und/oder in der Profiltiefe voneinander unterscheiden.

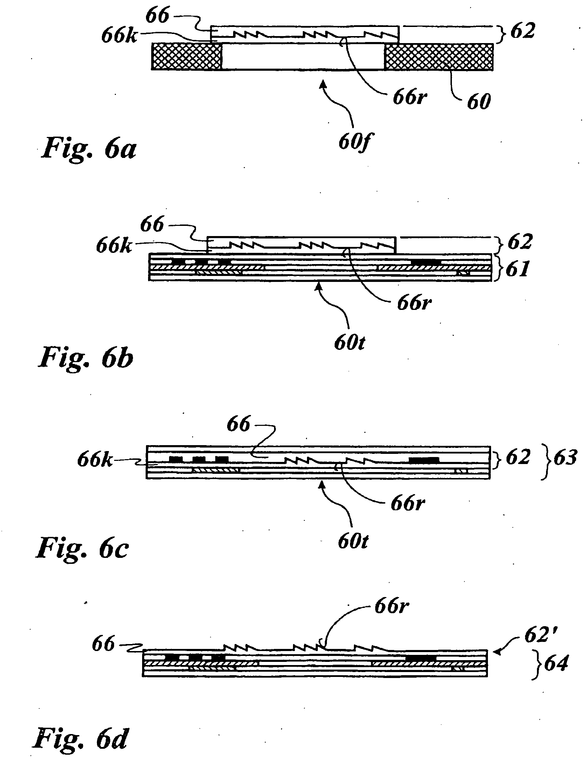

Die Fig. 6a bis 6d zeigen nun Anordnungsbeispiele einer Strukturschicht 66, die auf ihrer Oberseite eine Reliefstruktur 66r aufweist, die in einem transparenten Sicherheitselement 62 in der Grenzfläche zwischen der Strukturschicht 66 und einer darauf angeordneten Schicht 66k, beispielsweise einer Kleberschicht, ausgebildet ist. Die beiden Schichten sind mit unterschiedlichen Brechungsindizes ausgebildet, wie es zuvor in den Fig. 2 bis 5b ausführlich beschrieben ist. Bei der Strukturschicht 66 kann es sich beispielsweise um eine Heißprägeschicht handeln. Die Reliefstruktur 66r kann mit Al oder ZnS beschichtet sein. Es kann also vorgesehen sein, daß in die Heißprägeschicht zunächst die Reliefstruktur 66r abgeformt wird, die anschließend mit Al oder ZnS beschichtet wird, wobei abschließend die beschichtete Reliefstruktur 66r mit der Kleberschicht 66k überdeckt wird.

Fig. 6a zeigt einen Träger 60, der beispielsweise aus einem papierförmigen Material sein kann und mit einer fensterförmigen Durchbrechung 60f versehen ist, über der das Sicherheitselement 62 angeordnet ist. Auf diese Weise kann das Sicherheitselement 62 sowohl von seiner Vorderseite als auch von seiner Rückseite her betrachtet werden.

Fig. 6b zeigt einen Träger 61, der als mehrschichtiger Körper ausgebildet ist. Es kann sich dabei beispielsweise um eine Ausweiskarte oder eine Plastik-Banknote handeln, die aus mehreren Schichten laminiert ist. Der Träger 61 weist einen transparenten Fensterbereich auf, auf dem auf der Vorderseite des Trägers 61 das Sicherheitselement 62 angeordnet ist. Das Sicherheitselement 62 kann sowohl von seiner Vorderseite als auch durch den transparenten Fensterbereich des Trägers 61 von seiner Rückseite her betrachtet werden.

Fig. 6c zeigt nun einen Träger 63, der als mehrschichtiger Körper ausgebildet ist, und bei dem es sich wie in Fig. 6b um eine aus mehreren Schichten laminierte Ausweiskarte handeln kann. Nunmehr bilden Bereiche zweier im Innern des Trägers 63 angeordneter Schichten das Sicherheitselement 62. In diesem Bereich sind alle übrigen Schichten des Trägers 63 transparent ausgebildet, so daß das Sicherheitselement 62 sowohl von seiner Vorderseite als auch von seiner Rückseite her betrachtet werden kann. Bei der Schicht 66k kann es sich, wie weiter oben beschrieben, um eine Kleberschicht handeln.

Fig. 6d zeigt schließlich einen Träger 64, der wie die in Fig. 6b bzw. 6c beschriebenen Träger 61 bzw. 63 einen mehrschichtigen Körper bildet. Nunmehr ist die Reliefstruktur 66r in die oberste Schicht des Trägers 64 abgeformt und bildet so ein Sicherheitselement 62', das nur aus einer Schicht besteht. Die für die optische Funktion notwendige Deckschicht mit unterschiedlichem Brechungsindex wird durch die das Sicherheitselement 64 umgebende Luft gebildet. Die Reliefstruktur 66r kann in dem in Fig. 6d dargestellten Ausführungsbeispiel zugleich ein taktiles Sicherheitsmerkmal bilden.

Es kann vorgesehen sein, die Oberfläche der Reliefstruktur 66r mit einer wenige nm dicken metallischen Reflexionsschicht zu belegen, um die Reflexion der Oberfläche der Reliefstruktur 66r zu verbessern. Eine dünne metallische Schicht erscheint im Durchlicht mehr oder weniger transparent, so daß das optische Sicherheitsmerkmal des Sicherheitselements 62 bzw. 62' im Durchlicht nicht wahrnehmbar ist.

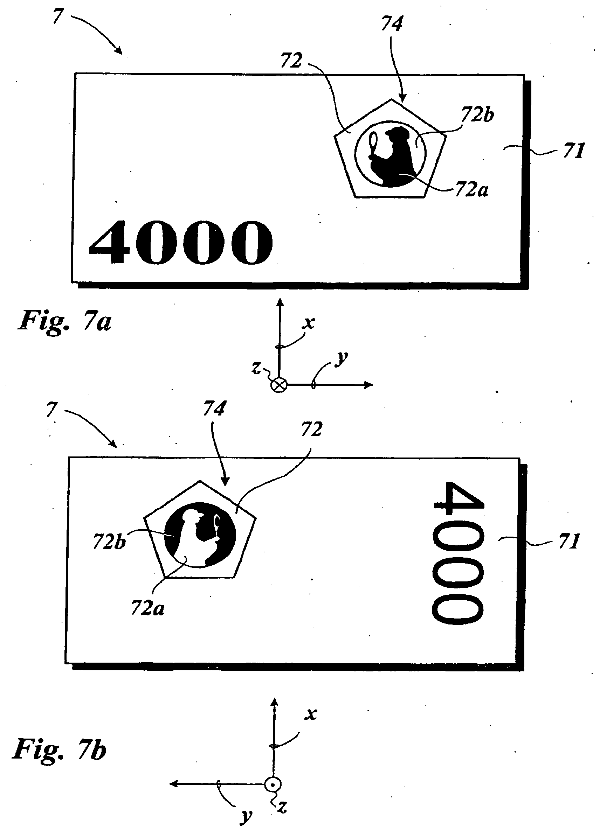

Die Fig. 7a und 7b zeigen ein zweites Anwendungsbeispiel eines erfindungsgemäßen Sicherheitselements mit asymmetrischer Reliefstruktur.

Die Fig. 7a zeigt ein Sicherheitsdokument 7 mit einem Sicherheitselement 72 in der Vorderansicht und Fig. 7b zeigt das Sicherheitsdokument 7 in der Rückansicht.

Das Sicherheitsdokument 7 ist in dem in Fig. 7a und 7b dargestellten Beispiel ein Wertdokument, beispielsweise eine Banknote oder ein Scheck.

Das Sicherheitsdokument 7 besteht aus einem flexiblen Träger 71, der eine fensterförmige Durchbrechung 74 aufweist, die durch Applizieren des transparenten Sicherheitselements 72 wieder verschlossen ist. Der Träger 71 kann im übrigen wie der in Fig. 1 a und 1 b beschriebene Träger 11 ausgebildet sein.

Wie in Fig. 7a und 7b dargestellt, ist auf dem Sicherheitselement 72 bei Betrachtung der Vorderseite des Sicherheitsdokuments 7 eine bildliche Darstellung in Form eines Bereiches 72a zu erkennen. Der Bereich 72a ist in einem Bereich 72b angeordnet. Beide Bereiche unterscheiden sich durch ihre Helligkeit und/oder Farbe voneinander, wenn das Sicherheitsdokument in der in den Fig. 4a und 4b beschrieben Art im auffallenden Licht betrachtet wird. Beide Bereiche weisen die gleiche asymmetrische Reliefstruktur auf, wobei die Reliefstruktur im Bereich 72b gegenüber der im Bereich 72a abgeformten Reliefstruktur um 180° um die $\gamma$-Achse gedreht ist. Es kann sich aber auch um unterschiedliche asymmetrische Reliefstrukturen handeln, die in einem ähnlichen Winkelbereich aufleuchten. In dem in Fig. 7a dargestellten Beispiel fällt also nur das Licht, das von den Sägezahnflanken der im Bereich 72b abgeformten Reliefstruktur reflektiert wird, in das Auge des nicht dargestellten Beobachters, so daß der Bereich 72b hell aufleuchtet, während der Bereich 72a dunkel erscheint.

Bei der in Fig. 7b dargestellten Betrachtung der Rückseite des Sicherheitsdokuments 7 ist nun der Bereich 72a so ausgerichtet, daß das von seinen Sägezahnflanken reflektierte Licht in das Auge des Beobachters gelangt. Deshalb leuchtet nunmehr der Bereich 72a hell auf und der Bereich 72b erscheint dunkel. Beim Vergleich der Fig. 7a und 7b ist zu erkennen, daß die bildliche Darstellung auf dem Sicherheitselement 72 auf der Rückseite nicht nur spiegelverkehrt zu der auf der Vorderseite erkennbaren bildlichen Darstellung ausgebildet ist, sondern dass eine Kontrastumkehr sichtbar ist.

Die in den Bereichen 72a und 72b von Fig. 7a und 7b vorgesehenen Reliefstrukturen weisen eine Gitterkonstante von etwa 1 $\mu$m auf. Sie lenken deshalb das gebeugte Licht in Abhängigkeit von der Wellenlänge des Lichtes in unterschiedliche Richtungen, so daß die Bereiche 72a bzw. 72b bei Beleuchtung mit Tageslicht in den Regenbogenfarben aufleuchten. Solche Reliefstrukturen sind auch bei ungünstigen Beleuchtungsverhältnissen verwendbar, beispielsweise bei diffuser Beleuchtung. Sie sind in der Art von Wasserzeichen in derzeitigen KINEGRAM®-Designs einsetzbar und können deshalb auch als diffraktive Wasserzeichen bezeichnet werden. Sie können durch symmetrische Reliefstrukturen, beispielsweise mit sinusquadratischem Verlauf, wenn überhaupt, nur sehr schwer nachgeahmt werden. Es kann also vorgesehen sein, daß das Sicherheitselement 72 außerhalb der Bereiche 72a und 72b als ein KINEGRAM® ausgebildet ist, das einen Bildhintergrund bildet, der sowohl bei der Betrachtung von der Vorderseite als auch von der Rückseite her den gleichen optischen Eindruck vermittelt.

In den vorstehend beschrieben Ausführungsbeispielen ist vorgesehen, daß es sich bei beiden Reliefstrukturen um asymmetrische Reliefstrukturen handelt. Es kann aber auch vorgesehen sein, daß nur eine der beiden Reliefstrukturen asymmetrisch ausgebildet ist und die zweite Reliefstruktur eine symmetrische Reliefstruktur, eine Mattstruktur oder schlicht eine ebene Fläche ist..

Wenn hier im Zusammenhang mit der asymmetrischen Reliefstruktur der Begriff des Sägezahns verwendet wird, ist er nicht auf Reliefstrukturen mit konstanter Flankenbreite $x_1 x_2$ oder auf Flanken, die als Geraden ausgebildet sind, beschränkt. Es kann sich auch um Flanken handeln, die durch nichtlineare Funktionen beschreibbar sind, sofern sich die erste Flanke von der folgenden zweiten Flanke unterscheidet, also beide Flanken nicht symmetrisch zueinander ausgebildet sind. Es kann sich weiter um Reliefstrukturen handeln, bei denen die Flankenbreite über ihre Erstreckung zunimmt oder abnimmt, d.h. bei der die Spatialfrequenz nicht konstant ist und/oder die Tiefe variiert.

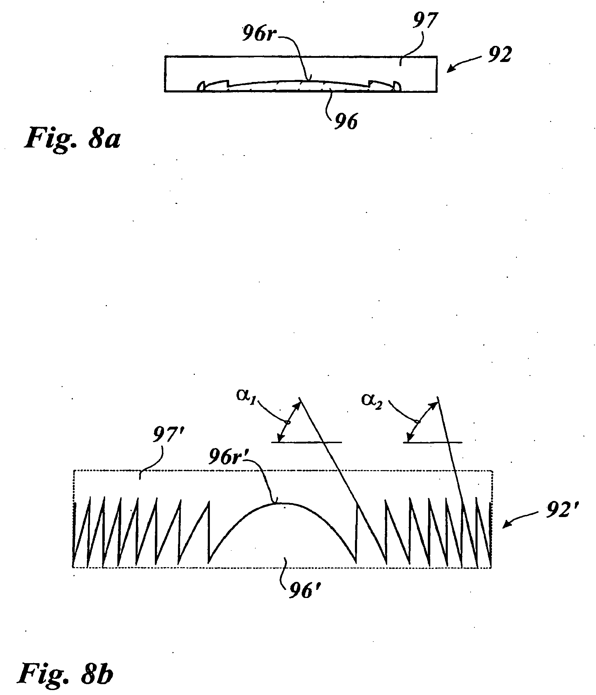

In Fig. 8a ist ein transparentes Sicherheitselement 92 dargestellt mit einer Strukturschicht 96, die eine Reliefstruktur aufweist 96r, die den visuellen Eindruck einer Linse oder eines Hohlspiegels erzeugt. Bei der Reliefstruktur 96r handelt es sich um eine asymmetrische Reliefstruktur, deren Flankenbreite bzw. Periodenlänge über ihre Erstreckung zunimmt oder abnimmt und deren Flanken nichtlinear ausgebildet sind. Die gleiche Wirkung ist aber auch mit linearen Flanken erzielbar und allgemein mit diffraktiven Reliefstrukturen mit nichtkonstanter Spatialfrequenz. Mit der Änderung der Spatialfrequenz und/oder der Tiefe ist zugleich eine Änderung der Flankensteilheit verbunden, d.h. die Flankensteilheit nimmt mit wachsender Spatialfrequenz zu, wie weiter unten in Fig. 8b im einzelnen dargestellt.

Die Strukturschicht 96 ist mit einer Strukturschicht 97 abgedeckt. Bei der Strukturschicht 97 kann es sich beispielsweise um eine Schutzlackschicht handeln. Es kann sich aber auch um eine Schicht mit einem hohen Brechungsindex handeln, so daß der Reflexionsgrad der Reliefstruktur 96r verbessert ist. Es kann also vorgesehen sein, daß die Differenz zwischen den Brechungsindizes der beiden Strukturschichten 96 und 97 hoch ist, beispielsweise 0,8 ist. Weiter kann vorgesehen sein, daß es sich bei der Strukturschicht 97 um eine Heißprägeschicht und bei der Strukturschicht 96 um eine Kleberschicht handelt oder umgekehrt.

In Fig. 8b ist nun in vergrößerter Darstellung ein transparentes Sicherheitselement 92' dargestellt mit einer Strukturschicht 96', die eine asymmetrische Reliefstruktur 96r' aufweist, deren Periodenlänge über ihre Erstreckung zunimmt oder abnimmt. In Fig. 8b ist $\alpha_1$ ein Flankenwinkel einer innenliegenden Flanke und $\alpha_2$ ein Flankenwinkel einer weiter außen liegenden Flanke. Wie in Fig. 8b zu erkennen ist, gilt die Beziehung

$$\alpha_1 < \alpha_2,$$

d.h. die weiter außen angeordnete Flanke verläuft steiler als die weiter innen angeordnete Flanke. Gleichzeitig steigt mit sinkender Periodenlänge die Spatialfrequenz, denn die Spatialfrequenz ist umgekehrt proportional zur Periodenlänge bzw. Flankenbreite.

In analoger Weise ruft eine Änderung der Tiefe bei gleichbleibender Flankenbreite eine Änderung des Flankenwinkels hervor, wobei mit zunehmender Tiefe der Flankenwinkel wächst.

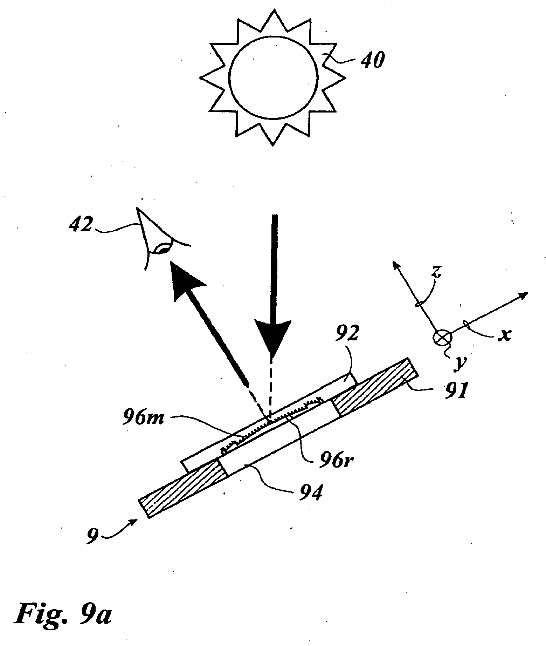

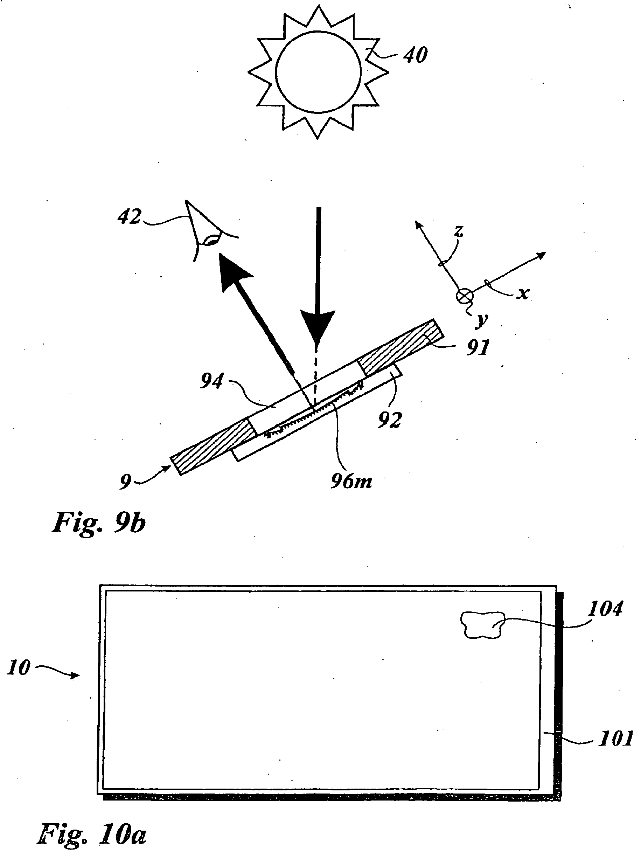

Die Reliefstruktur 96r kann im Auflicht je nach Betrachtungsrichtung als konvexer oder als konkaver Hohlspiegel wirken. Designelemente, wie Bilder, Logos oder Text können mit Hilfe des Hohlspiegels für den Betrachter scheinbar über oder unter der Oberfläche des Sicherheitselements angeordnet sein. Die Fig. 9a und 9b erläutern diesen optischen Effekt näher.

Fig. 9a zeigt ein Sicherheitsdokument 9, das mit dem in Fig. 8a beschriebenen transparenten Sicherheitselement 92 versehen ist. Das Sicherheitsdokument 9 besteht aus einem flexiblen Träger 91, auf dem das Sicherheitselement 92 in einer fensterförmigen Durchbrechung 94 angeordnet ist. Der Träger 91 kann im übrigen wie der in Fig. 1a und 1b beschriebene Träger 11 ausgebildet sein. Er weist in dem Bereich 94 eine fensterförmige Durchbrechung auf, die durch Applizieren des Sicherheitselements 92 wieder verschlossen ist.

Die Reliefstruktur 96r der Strukturschicht 96 ist in dem in Fig. 9a und 9b dargestellten Ausführungsbeispiel zur Verbesserung der Reflexion mit einer dünnen metallischen Schicht 96m überzogen. Die metallische Schicht 96m weist eine Dicke von einigen nm auf und erscheint deshalb im durchscheinenden Licht transparent. Sie reflektiert jedoch auffallendes Licht.

Bereichsweise kann auch eine nichttransparente metallische Schicht vorhanden sein.

Das Sicherheitselement 92 bildet in der in Fig. 9a gezeigten Lage einen konvexen Hohlspiegel, der in dem Auge 42 des Beobachters von einem vor dem Hohlspiegel angeordneten Objekt ein verkleinertes virtuelles Abbild erzeugt, das sich hinter der Oberfläche des Trägers 91 befindet. Bei dem Objekt kann es sich beispielsweise um ein Bild oder einen Text oder ein OVD handeln, das in einem geeigneten Abstand von der Oberfläche des Trägers angeordnet ist. Der Abstand, der im wesentlichen nach der Brennweite des Hohlspiegels gewählt wird, kann beispielsweise durch eine transparente Trägerschicht mit entsprechender Dicke erzeugt werden. Es kann auch vorgesehen sein, das Objekt in einer zweiten fensterförmigen Durchbrechung des Sicherheitsdokuments 9 anzuordnen und die zweite fensterförmige Durchbrechung durch Falten des Sicherheitsdokuments 9 in eine solche Lage zu bringen, daß sich das im Hohlspiegel abzubildende Objekt über der fensterförmigen Durchbrechung 94 befindet.

Fig. 9b zeigt nun das Sicherheitsdokument 9 nach einer Drehung um 180°, d.h., nunmehr ist das Auge 42 des Beobachters auf die Rückseite des Sicherheitselements 92 gerichtet. Die Reliefstruktur 96r bildet nunmehr einen konkaven Hohlspiegel nach: Der Hohlspiegel erzeugt von einem vor dem Hohlspiegel angeordneten Objekt ein vergrößertes reales Abbild, das sich vor der Oberfläche des Trägers 91 befindet.

Die Fig. 10a bis 10c zeigen nun ein Anwendungsbeispiel für das vorstehend beschriebene Sicherheitselement 92 in drei aufeinanderfolgenden fertigungsschritten.

Fig. 10a zeigt ein Sicherheitsdokument 10, das aus einem flexiblen Träger 101 besteht, der nach dem ersten Fertigungsschritt eine fensterförmige Durchbrechung 104 aufweist. In dem dargestellten Beispiel handelt es sich bei dem Sicherheitsdokument 10 um eine Banknote.

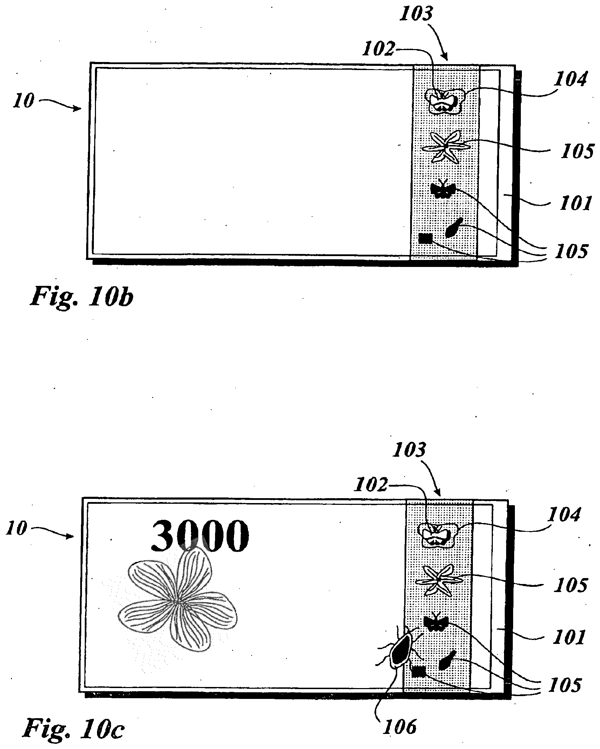

Fig. 10b zeigt nun das Sicherheitsdokument 10, auf das nach dem zweiten Fertigungsschritt ein Sicherheitsstreifen 103 aufgebracht ist. Der Sicherheitsstreifen 103 weist im oberen Abschnitt ein Sicherheitselement 102 auf, das die im flexiblen Träger 101 eingebrachte fensterförmige Durchbrechung 104 überdeckt. Auf der vor der diffraktiven Reliefstruktur angeordneten Schicht und der von der Reliefstruktur abgewandten Seite der anderen Strukturschicht (s. Pos. 97 und 96 in Fig. 8) des Sicherheitselements 102 ist ein Bild eines Schmetterlings aufgebracht. Wegen der hohlspiegelförmigen Wirkung der Reliefstruktur des Sicherheitselements 102 scheint der Schmetterling je nach Betrachtung von der Vorderseite oder von der Rückseite des Sicherheitsdokuments 10 her unter oder über dessen Oberfläche zu schweben bzw. hervorzustehen. Dieser optische Eindruck wird auf der Vorderseite des Sicherheitsdokuments 10 noch dadurch verstärkt, daß der Sicherheitsstreifen 103 mit bildlichen Darstellungen 105 bedruckt ist, die u.a. optische Bezugspunkte bilden.

Fig. 10c zeigt das Sicherheitsdokument 10 nach seiner Fertigstellung. Neben dem Werteindruck und graphischen Schmuckelementen, die durch Bedrucken aufgebracht sind, ist ein graphisches Sicherheitselement 106 vorgesehen, das so aufgebracht ist, daß es einen Bereich des Sicherheitsstreifens 103 überdeckt und deshalb beim Ablösen des Sicherheitsstreifens 103 zerstört wird.

**Patentansprüche**

1. Sicherheitsdokument mit einem Trägersubstrat und einem in einem Fenster oder in einem transparenten Bereich des Trägersubstrats angeordneten transparenten Sicherheitselement (12, 62, 72, 92), das eine transparente Strukturschicht (16, 66, 96) und eine in eine erste Oberfläche der Strukturschicht abgeformte diffraktive Reliefstruktur aufweist, wobei in einem ersten Bereich (12f, 72a) der Strukturschicht (16, 66, 96) eine erste Reliefstruktur in die erste Oberfläche der Strukturschicht (16, 66, 96) abgeformt ist, die als asymmetrische diffraktive Reliefstruktur mit einer Periodenlänge bis zu 20 μm ausgebildet ist und eine alphanumerische und/oder bildliche Information enthält, die für einen Betrachter auf der Vorderseite und/oder der Rückseite des Sicherheitselements (12, 62, 72, 92) sichtbar ist, und wobei auf der Seite der ersten Oberfläche an die Strukturschicht (16, 66, 96) eine oder mehrere Schichten angrenzen, die als reflektive, transparente Schichten ausgebildet sind oder als gegenüber der Strukturschicht einen Brechungsindex-Unterschied > 0,2 aufweisende, transparente Schichten ausgebildet sind, so daß sowohl das auf die Vorderseite als auch das auf die Rückseite des Sicherheitselements (12, 62, 72, 92) fallende Licht im ersten Bereich (12f, 72a) von der ersten Reliefstruktur gebeugt wird, und wobei die erste Reliefstruktur derart ausgebildet ist, dass die erste Reliefstruktur im Auflicht eine in Vorderansicht und in Rückansicht unterschiedliche optische Wirkung ausbildet, derart dass die für den Betrachter auf der Vorderseite und/oder der Rückseite sichtbare Information keine lediglich seitenverkehrte Darstellung der jeweils auf der gegenüberliegenden Seite sichtbaren Information ist, wobei in einem zweiten Bereich (12t, 72b) der Strukturschicht (16, 66, 96) eine zweite Reliefstruktur in die erste Oberfläche der Strukturschicht (16, 66, 96) abgeformt ist, die als asymmetrische diffraktive Reliefstruktur ausgebildet ist und deren Verlauf im wesentlichen spiegelbildlich zu dem Verlauf der im ersten Bereich (12f, 72a) abgeformten ersten Reliefstruktur ausgebildet ist, wobei die zweite Reliefstruktur im Auflicht eine in Vorderansicht und in Rückansicht unterschiedliche optische Wirkung ausbildet, die erste Reliefstruktur und/oder die zweite Reliefstruktur als ein Blazegitter ausgebildet ist und das Blazegitter als ein achromatisches Blazegitter mit einer Gitterkonstanten von 20 μm bis 3 μm, insbesondere von 10 μm, ausgebildet ist und eine Profiltiefe von 0,3 μm bis 5 μm, insbesondere von 1,5 μm, aufweist.

2. Sicherheitsdokument nach Anspruch 1,
   **dadurch gekennzeichnet,**
   **daß** der erste Bereich (12f) und der zweite Bereich (12t) der Strukturschicht (16) ineinander verschachtelte Raster bilden.

3. Sicherheitsdokument nach Anspruch 2,
   **dadurch gekennzeichnet,**
   **daß** der erste Bereich (12f) und der zweite Bereich (12t) der Strukturschicht (16) ineinander verschachtelte Linearraster bilden.

4. Sicherheitsdokument nach Anspruch 3 oder 4,
   **dadurch gekennzeichnet,**
   **daß** die Rasterweite < 300 μm ist, insbesondere 50 μm ist.

5. Sicherheitsdokument nach einem der vorhergehenden Ansprüche,
   **dadurch gekennzeichnet,**
   **daß** die erste Oberfläche der Strukturschicht (16, 66, 96) zumindest bereichsweise mit einer reflektierenden metallischen Schicht (96m) beschichtet ist.

6. Sicherheitsdokument nach Anspruch 5,
   **dadurch gekennzeichnet,**
   **daß** die reflektierende metallische Schicht (96m) abschnittsweise aus unterschiedlichen Materialien gebildet ist, insbesondere daß der erste Bereich (12f) mit einer ersten metallischen Schicht und der zweite Bereich (12t) mit einer zweiten metallischen Schicht beschichtet ist.

7. Sicherheitsdokument nach Anspruch 5,
   daß die metallische Schicht (96m) musterförmige opake Bereiche aufweist.

8. Sicherheitsdokument nach Anspruch 5,
   **dadurch gekennzeichnet,**
   **daß** die metallische Schicht (96m) zumindest bereichsweise mit einer solchen Dicke ausgebildet ist, daß sie im Durchlicht transparent ist.

9. Sicherheitsdokument nach einem der vorhergehenden Ansprüche,
   **dadurch gekennzeichnet,**
   **daß** die erste Oberfläche der Strukturschicht (16, 66, 96) zumindest bereichsweise mit einer dielektrischen HRI-Schicht mit einem hohen Brechungsindex beschichtet ist, wobei die beschichteten Bereiche semi-transparent ausgebildet sind.

10. Sicherheitsdokument nach einem der vorhergehenden Ansprüche,
   **dadurch gekennzeichnet,**
   **daß** die erste Reliefstruktur oder die zweite Reliefstruktur eine asymmetrische diffraktive Reliefstruktur (96r) ist, die ausgehend von einem Bezugspunkt in mindestens zwei Richtungen mit sich ändernder Spatialfrequenz oder Tiefe ausgebildet ist, und auf die eine Reflexionsschicht aufgebracht ist.

11. Sicherheitsdokument nach einem der vorhergehenden Ansprüche,
   **dadurch gekennzeichnet,**
   **daß** in einem dritten Bereich der Strukturschicht (16, 66, 96) eine dritte Reliefstruktur in die erste Oberfläche der Strukturschicht (16, 66, 96) abgeformt ist, wobei die dritte Reliefstruktur im Auflicht eine in Vorderansicht und in Rückansicht gleiche optische Wirkung ausbildet.

12. Sicherheitsdokument nach Anspruch 10,
   **dadurch gekennzeichnet,**
   **daß** die dritte Reliefstruktur als symmetrische diffraktive Reliefstruktur ausgebildet ist.

13. Sicherheitsdokument nach Anspruch 10,
   **dadurch gekennzeichnet,**
   **daß** die dritte Reliefstruktur als Mattstruktur ausgebildet ist.

14. Sicherheitsdokument nach Anspruch 10,
   **dadurch gekennzeichnet,**
   **daß** in dem dritten Bereich ein Dünnschichtsystem angeordnet ist.

15. Sicherheitsdokument nach Anspruch 10,
   **dadurch gekennzeichnet,**
   **daß** in dem dritten Bereich eine Flüssigkristallschicht angeordnet ist.

16. Sicherheitsdokument nach einem der vorhergehenden Ansprüche,
   **dadurch gekennzeichnet,**
   **daß** das Sicherheitselement ein mehrschichtiger Folienkörper mit einer transparenten Trägerschicht ist.

17. Sicherheitsdokument nach einem der Ansprüche 1 bis 14,
   **dadurch gekennzeichnet,**
   **daß** das Sicherheitselement eine Transferlage einer Transferfolie ist.

18. Sicherheitsdokument nach einem der Ansprüche 1 bis 14,
   **dadurch gekennzeichnet,**
   **daß** die Strukturschicht (16, 66, 96) eine äußere Schicht des Sicherheitsdokuments oder ein Abschnitt einer äußeren Schicht des Sicherheitsdokuments ist.

19. Sicherheitsdokument nach einem der Ansprüche 1 bis 14,
   **dadurch gekennzeichnet,**
   **daß** die Strukturschicht (16, 66, 96) eine innere Schicht des Sicherheitsdokuments oder ein Abschnitt einer inneren Schicht des Sicherheitsdokuments ist.

**Claims**

1. Security document having a carrier substrate and a transparent security element (12, 62, 72, 92) that is arranged in a window or in a transparent region of the carrier substrate and has a transparent structural layer (16, 66, 96) and a diffractive relief structure moulded into a first surface of the structural layer, wherein, in a first region (12f, 72a) of the structural layer (16, 66, 96), a first relief structure is moulded into the first surface of the structural layer (16, 66, 96), which is formed as an asymmetrical diffractive relief structure having a period length of up to 20 $\mu$m and contains a piece of alphanumerical and/or graphic information which is visible to an observer on the front side and/or the back side of the security element (12, 62, 72, 92), and wherein, on the side of the first surface, one or more layers abut on the structural layer (16, 66, 96), said layers being formed as reflective, transparent layers or being formed as transparent layers having a refractive index difference of > 0.2 relative to the structural layer, such that light falling on both the front side and on the back side of the security element (12, 62, 72, 92) is bent in the first region (12f, 72a) by the relief structure, and wherein the first relief structure is formed in such a way that, in incident light, the first relief structure forms an optical effect that is different in the front view and in the back view in such a way that the piece of information that is visible to the observer on the front side and/or the back side is not simply a mirror-inverted depiction of the piece of information visible on the opposing side, wherein, in a second region (12t, 72b) of the structural layer (16, 66, 96), a second relief structure is moulded into the first surface of the structural layer (16, 66, 96), which is formed as an asymmetrical diffractive relief structure and whose course is formed substantially as a mirror image in relation to the course of the first relief structure moulded in the first region (12f, 72a), wherein, in incident light, the second relief structure forms an optical effect that is different in the front view and in the back view, the first relief structure and/or the second relief structure is formed as a blazed grating and the blazed grating is formed as an achromatic blazed grating having a grating constant of 20 $\mu$m to 3 $\mu$m, in particular of 10 $\mu$m, and has a profile depth of 0.3 $\mu$m to 5 $\mu$m, in particular of 1.5 $\mu$m.

2. Security document according to claim 1,
**characterised in that**
the first region (12f) and the second region (12t) of the structural layer (16) form grids that interlace with one another.

3. Security document according to claim 2,
**characterised in that**
the first region (12f) and the second region (12t) of the structural layer (16) form linear grids that interlace with one another.

4. Security document according to claim 3 or 4,
**characterised in that**
the grid width is < 300 $\mu$m, in particular is 50 $\mu$m.

5. Security document according to one of the preceding claims,
**characterised in that**
the first surface of the structural layer (16, 66, 96) is at least regionally coated by a reflective metallic layer (96m).

6. Security document according to claim 5,
**characterised in that**
the reflective metallic layer (96m) is formed in sections from different materials, in particular the first region (12f) is coated with a first metallic layer and the second region (12t) is coated with a second metallic layer.

7. Security document according to claim 5,
that the metallic layer (96m) has patterned opaque regions.

8. Security document according to claim 5,
**characterised in that**
the metallic layer (96m) is at least regionally formed having such a thickness that it is transparent in transmitted light.

9. Security document according to one of the preceding claims,
**characterised in that**
the first surface of the structural layer (16, 66, 96) is at least regionally coated with a dielectric HRI layer having a high refractive index, wherein the coated regions are formed to be semi-transparent.

10. Security document according to one of the preceding claims,
**characterised in that**
the first relief structure or the second relief structure is an asymmetrical diffractive relief structure (96r), which is formed having a changing spatial frequency or depth, starting from a reference point in at least two directions, and is applied to the one reflection layer.

11. Security document according to one of the preceding claims,
**characterised in that**,
in a third region of the structural layer (16, 66, 96), a third relief structure is moulded into the first surface of the structural layer (16, 66, 96), wherein, in incident light, the third relief structure forms an optical effect that is the same in the front view and in the back view.

**12.** Security document according to claim 10,
 **characterised in that**
 the third relief structure is formed as a symmetrical diffractive relief structure.

**13.** Security document according to claim 10,
 **characterised in that**
 the third relief structure is formed as a matt structure.

**14.** Security document according to claim 10,
 **characterised in that**
 a thin layer system is arranged in the third region.

**15.** Security document according to claim 10,
 **characterised in that**
 a liquid crystal layer is arranged in the third region.

**16.** Security document according to one of the preceding claims,
 **characterised in that**
 the security element is a multi-layer film body having a transparent carrier layer.

**17.** Security document according to one of claims 1 to 14,
 **characterised in that**
 the security element is a transfer layer of a transfer film.

**18.** Security document according to one of claims 1 to 14,
 **characterised in that**
 the structural layer (16, 66, 96) is an outer layer of the security document or a section of an outer layer of the security document.

**19.** Security document according to one of claims 1 to 14,
 **characterised in that**
 the structural layer (16, 66, 96) is an inner layer of the security document or a section of an inner layer of the security document.

**Revendications**

**1.** Document de sécurité comportant un substrat de support et un élément de sécurité transparent (12, 62, 72, 92) disposé dans une fenêtre ou dans une zone transparente du substrat de support, lequel élément présente une couche structurelle transparente (16, 66, 96) et une structure en relief diffractive moulée dans une première surface de la couche structurelle, dans une première zone (12f, 72a) de la couche structurelle (16, 66, 96) une première structure en relief étant moulée dans la première surface de la couche structurelle (16, 66, 96), qui est réalisée sous forme de structure en relief diffractive asymétrique avec une longueur de période allant jusqu'à 20 μm et contient une information alphanumérique et/ou sous forme d'image, qui est visible pour l'observateur sur la face avant et/ou la face arrière de l'élément de sécurité (12, 62, 72, 92), et une ou plusieurs couches jouxtant la couche structurelle (16, 66, 96) sur le côté de la première surface, lesquelles sont réalisées sous forme de couches transparentes réfléchissantes ou sont réalisées sous forme de couches transparentes présentant une différence d'indice de réfraction > 0,2 par rapport à la couche structurelle, de sorte qu'aussi bien la lumière incidente sur la face avant que la lumière incidente sur la face arrière de l'élément de sécurité (12, 62, 72, 92) sont diffractées dans la première zone (12f, 72a) par la première structure en relief, et la première structure en relief étant réalisée de telle manière que la première structure en relief forme en réflexion un effet optique différent vu de l'avant et vu de l'arrière de telle manière que l'information visible pour l'observateur sur la face avant et/ou la face arrière n'est pas une représentation simplement renversée de l'information visible respectivement sur la face opposée, dans une deuxième zone (12t, 72b) de la couche structurelle (16, 66, 96), une deuxième structure en relief étant moulée dans la première surface de la couche structurelle (16, 66, 96), qui est réalisée sous forme de structure en relief diffractive asymétrique et dont l'allure est réalisée essentiellement en miroir par rapport à l'allure de la première structure en relief moulée dans la première zone (12f, 72a), la deuxième structure en relief formant en réflexion un effet optique différent vu de l'avant et vu de l'arrière, la première structure en relief et/ou la deuxième structure en relief étant réalisée sous forme de réseau blazé et le réseau blazé étant réalisé sous forme de réseau blazé achromatique avec une constante de réseau de 20 μm à 3 μm, en particulier de 10 μm, et présentant une profondeur de profil de 0,3 μm à 5 μm, en particulier de 1,5 μm.

2. Document de sécurité selon la revendication 1,
   **caractérisé en ce**
   **que** la première zone (12f) et la deuxième zone (12t) de la couche structurelle (16) forment des trames imbriquées les unes dans les autres.

3. Document de sécurité selon la revendication 2,
   **caractérisé en ce**
   **que** la première zone (12f) et la deuxième zone (12t) de la couche structurelle (16) forment des trames linéaires imbriquées les unes dans les autres.

4. Document de sécurité selon la revendication 3 ou 4,
   **caractérisé en ce**
   **que** la largeur de la trame est < 300 μm, en particulier de 50 μm.

5. Document de sécurité selon l'une quelconque des revendications précédentes,
   **caractérisé en ce**
   **que** la première surface de la couche structurelle (16, 66, 96) est revêtue au moins par zones d'une couche métallique réfléchissante (96m).

6. Document de sécurité selon la revendication 5,
   **caractérisé en ce**
   **que** la couche métallique réfléchissante (96m) est formée par sections de différents matériaux, en particulier **en ce** **que** la première zone (12f) est revêtue d'une première couche métallique et la deuxième zone (12t) d'une deuxième couche métallique.

7. Document de sécurité selon la revendication 5,
   **caractérisé en ce**
   **que** la couche métallique (96m) présente des zones opaques en forme de motif.

8. Document de sécurité selon la revendication 5,
   **caractérisé en ce**
   **que** la couche métallique (96m) est réalisée au moins par zones d'une épaisseur telle qu'elle est transparente en transmission.

9. Document de sécurité selon l'une quelconque des revendications précédentes,
   **caractérisé en ce**
   **que** la première surface de la couche structurelle (16, 66, 96) est revêtue au moins par zones d'une couche HRI diélectrique avec un indice de réfraction élevé, les zones revêtues étant réalisées de manière semi-transparente.

10. Document de sécurité selon l'une quelconque des revendications précédentes,
    **caractérisé en ce**
    **que** la première structure en relief ou la deuxième structure en relief est une structure en relief (96r) diffractive asymétrique, qui, en partant d'un point de référence, est réalisée dans au moins deux directions avec une fréquence spatiale ou une profondeur variable et est appliquée sur une couche réfléchissante.

11. Document de sécurité selon l'une quelconque des revendications précédentes,
    **caractérisé en ce**
    **que** dans une troisième zone de la couche structurelle (16, 66, 96), une troisième structure en relief est moulée dans la première surface de la couche structurelle (16, 66, 96), la troisième structure en relief formant en réflexion le même effet optique vu de l'avant et vu de l'arrière.

**12.** Document de sécurité selon la revendication 10,
**caractérisé en ce**
**que** la troisième structure en relief est réalisée sous forme de structure en relief diffractive symétrique.

**13.** Document de sécurité selon la revendication 10,
**caractérisé en ce**
**que** la troisième structure en relief est réalisée sous forme de structure matte.

**14.** Document de sécurité selon la revendication 10,
**caractérisé en ce**
**qu'**un système à couche mince est disposé dans la troisième zone.

**15.** Document de sécurité selon la revendication 10,
**caractérisé en ce**
**qu'**une couche de cristaux liquides est disposée dans la troisième zone.

**16.** Document de sécurité selon l'une quelconque des revendications précédentes,
**caractérisé en ce**
**que** l'élément de sécurité est un corps de film à plusieurs couches avec une couche support transparente.

**17.** Document de sécurité selon l'une quelconque des revendications 1 à 14,
**caractérisé en ce**
**que** l'élément de sécurité est une couche de transfert d'un film de transfert.

**18.** Document de sécurité selon l'une quelconque des revendications 1 à 14,
**caractérisé en ce**
**que** la couche structurelle (16, 66, 96) est une couche extérieure du document de sécurité ou une partie d'une couche extérieure du document de sécurité.

**19.** Document de sécurité selon l'une quelconque des revendications 1 à 14,
**caractérisé en ce**
**que** la couche structurelle (16, 66, 96) est une couche intérieure du document de sécurité ou une partie d'une couche intérieure du document de sécurité.

**Fig. 1a**

**Fig. 1b**

**Fig. 2**

**Fig. 3a**

**Fig. 3b**

**Fig. 4a**

**Fig. 4b**

*Fig. 5a*

40

42

30°

16t

16ta

12

α′

14

11

1

z

x

y

**Fig. 5b**

**Fig. 6a**

**Fig. 6b**

**Fig. 6c**

**Fig. 6d**

Fig. 7a

Fig. 7b

*Fig. 8a*

*Fig. 8b*

**Fig. 9a**

**Fig. 9b**

**Fig. 10a**

*103*

*102*

*10*

*104*

*105*

*101*

*105*

**Fig. 10b**

*103*

*102*

*10*

**3000**

*104*

*105*

*101*

*105*

**Fig. 10c**

*106*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19729918 A1
- DE 10040785 A1
- DE 10129939 A1
- WO 03059643 A1
- DE 10254499 A1
- DE 10318157 A1
- EP 0012375 A2